(19) **Europäisches Patentamt / European Patent Office / Office européen des brevets**

(11) **EP 2 141 929 A2**

(12) # EUROPEAN PATENT APPLICATION

(43) Date of publication:
06.01.2010 Bulletin 2010/01

(51) Int Cl.:
$H04N\ 7/26$ (2006.01)  $H04N\ 7/46$ (2006.01)
$H04N\ 7/50$ (2006.01)

(21) Application number: 09251659.0

(22) Date of filing: 26.06.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR

(30) Priority: 30.06.2008 US 215861

(71) Applicant: Intel Corporation
Santa Clara, CA 95052 (US)

(72) Inventors:
• Mastronarde, Nicholas H.
Davis, CA 95616 (US)
• Jiang, Hong
El Dorado Hills, CA 95762 (US)

(74) Representative: Beresford, Keith Denis Lewis
Beresford & Co.
16 High Holborn
London
WC1V 6BX (GB)

(54) **Enabling selective use of fractional and bidirectional video motion estimation**

(57) A video encoder may analyze whether or not to do bidirectional or fractional motion estimation dependent on the cost in terms of bits needed to do the motion estimation versus the benefit of the analysis in terms of distortion, in some embodiments.

**Description**

Background

This relates generally to video encoding and decoding, and particularly to motion estimation. Video coding and decoding enables the compression of video so that it can be transported more effectively.

Various standards for video encoding exist, including the Motion Picture Experts Group standards. These standards include the possibility of the use of B frames. The B frame is a picture type that is bidirectionally predicted based on both previous and following pictures.

Macroblocks are blocks of pixels. Generally, a macroblock is a block of 16 pixels by 16 pixels.

In some cases, bidirectional video motion estimation improves the accuracy of the video compression. However, bidirectional motion estimation also increases the compression overhead, or the amount of time needed to complete the motion estimation phase.

Likewise fractional motion estimation, which considers the effect of fractional pixels, can improve the quality of motion estimation. Completing fractional motion estimation may increase the time that is needed to complete the estimation.

In general, bidirectional motion estimation and fractional motion estimation are used to create a better match between macroblocks in the current frame and macroblocks in previous or future reference frames. While bidirectional motion estimation and fractional motion estimation can produce improvements in coding efficiency, they also may consume execution cycles and take time, even when they do not significantly improve the coding efficiency.

Brief Description of the Drawings

Figure 1 is a schematic depiction of a video encoder in accordance with one embodiment;
Figure 2 is a flow chart for motion estimation in accordance with one embodiment;
Figures 3, 4, and 5 graphically depict the circumstances for selective pruning of bidirectional motion estimation and fractional motion estimation in accordance with some embodiments; and

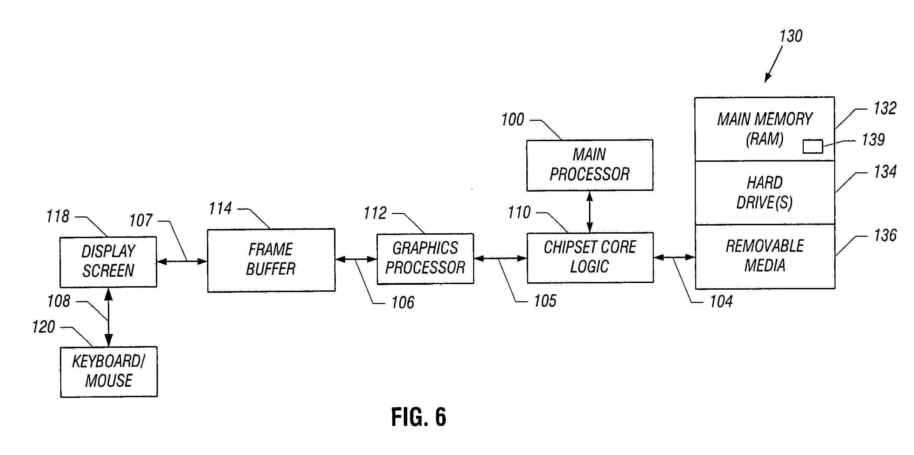

Figure 6 is a schematic depiction of a processor-based system in accordance with one embodiment of the present invention.

Detailed Description

In accordance with some embodiments, a decision may be made whether to use bidirectional motion estimation and fractional motion estimation during encoding of a B frame. The B frame is a picture type in Motion Picture Experts Group video encoding that is bidirectionally predicted based on both previous and following pictures. The decision about whether to undertake birdirectional motion estimation or fractional motion estimation for a particular macroblock partition is conditioned on the optimal distortion and the cost achieved by the forward and backward motion estimation searches. The macroblock partition may be, for example, 16 x 16, 16 x 8, 8 x 16, 8 x 8, 8 x 4, 4 x 8, or 4 x 4 pixel array.

In accordance with some embodiments, the decision to dispense with bidirectional motion estimation and fractional motion estimation may look at the forward and backward sum of absolute differences (SAD) cost values for any macroblock partition size. "Sum of absolute differences" is a metric used to compare the similarity of two macroblock partitions. It takes the absolute value of the difference between each pixel in the original macroblock partition and the corresponding pixel in the macroblock partition being used for comparison. These absolute differences are then summed to obtain the sum of absolute differences.

The terms "forward" and "backward" specify from which frames the two macroblock partitions are obtained for comparison. A forward sum of absolute differences means that the macroblock partition in the previous frame ($n$ - 1) is compared to a macroblock partition in the current frame ($n$). This is called "forward sum of absolute differences" because it looks forward in time to see how well the past predicts the present. "Backwards sum of absolute differences" means that the macroblock partition in a future frame ($n$ + 1) is compared to a macroblock partition in the current frame ($n$). This is called "backwards sum of absolute differences" because it looks backwards in time to see how well the present can be predicted from the future.

The cost can be calculated in a variety of ways. In general, the cost is a way to predict the number of bits required to record the macroblock mode decisions in the encoded bitstream. The macroblock mode decisions include things like the macroblock partition mode that describes whether, for example, the macroblock is partitioned into four 8 x 8 partitions or two 16 x 8 partitions. The macroblock mode decisions also include one or more motion vectors for each macroblock partition and include the fractional accuracy of motion vectors. The fractional accuracy determines whether the motion vectors point to an integer pixel position in the image or do they point to fractional positions, such as half and one-quarter of the way between two pixels.

Thus, the sum of absolute differences plus cost may be used because a mode decision may result in very small sum of absolute difference values (which is good), but with a cost because the mode decision is substantial to describe (which is bad). The cost to describe is determined by the number of bits required to record the macroblock mode decision in the encoded bitstream. Thus, if the cost of the encoding is relatively high relative to the benefit of the encoding, the encoding may simply be dispensed with.

"Direction", as used in this context, specifies either forward in time or backward in time. The direction with the larger sum of absolute difference plus cost means that we compare the forward sum of absolute difference plus cost and the backward sum of absolute difference plus cost to see which direction yields the largest sum of absolute difference plus cost.

In accordance with some embodiments, the mechanism may prevent skipping bidirectional motion estimation and fractional motion estimation results that are most likely to have the greatest impact on the rate distortion characteristics of the encoded video sequence.

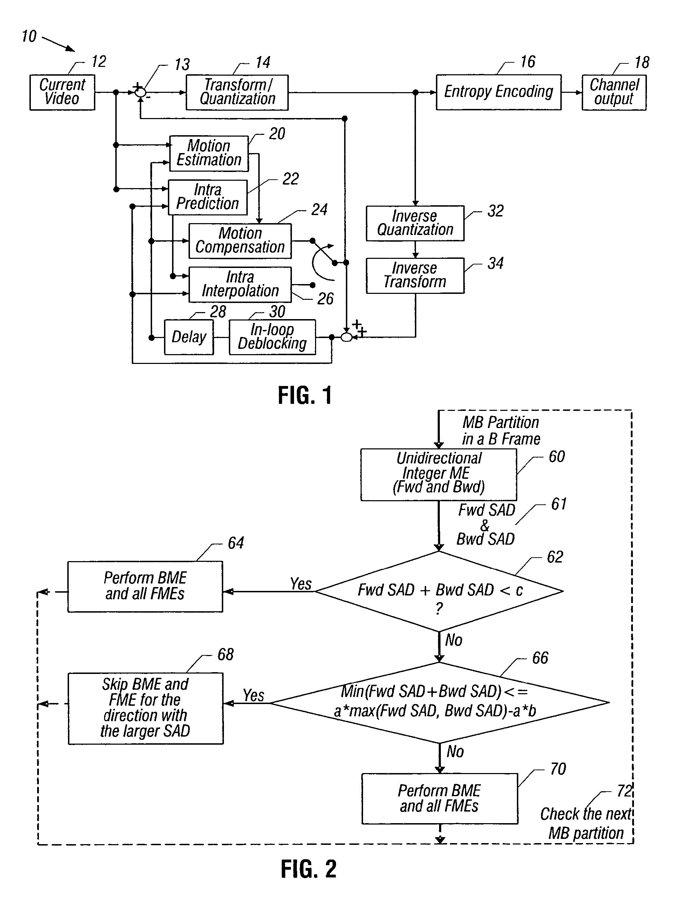

Referring to Figure 1, a video encoder 10, for example, in accordance with the H.264 standard (International Telecommunications Union, Geneva, Switzerland, H-264 (11/07), Advanced Video Coding for Generic Audio Visual Services), takes video as indicated in 12 and performs motion estimation at 20, intra-frame prediction at 22, and motion compensation at 24. Intra-frame interpolation may be accomplished at 26. After a delay in block 28, in-loop deblocking filtering may be accomplished at 30. The results of the frame compensation and the intra-frame interpolation may then be selectively fed back to a summing point 13.

The in-loop deblocking filter 30 receives the feedback from the selected motion compensation or intra-frame interpolation and the results of inverse quantization and inverse transform from the transformed and quantized stream from block 14. The transformed and quantized stream 14 is then subjected to entropy encoding at 16 and channel output at 18. In accordance with some embodiments of the present invention, the motion estimation block 20 is able to analyze whether or not to include bidirectional motion estimation and fractional motion estimation, or instead to simply proceed with basic motion estimation.

Referring to Figure 2, a sequence may be implemented in firmware, hardware, or software. Software implementations may be stored on a computer-readable medium including a semiconductor memory, an optical memory, or a magnetic memory. A macroblock (MB) partition in a B frame is provided to block 60. At block 60, unidirectional integer motion estimation, both forward and backward, is completed. Then a decision is made as to whether to implement bidirectional motion estimation and fractional motion estimation. For this purpose, the forward sum of absolute differences and backward sum of absolute differences are calculated at 60. The link at 61 shows that the calculated values for forward and backward sums are the outputs of block 60 and the inputs to diamond 62. In Figure 2, forward SAD and backward SAD refers to the sum plus cost.

A check at diamond 62 determines whether the sum of the forward sum of absolute differences plus cost and the backward sum of absolute differences plus cost is less than a constant c. The constant c may be determined in accordance with experience. In some embodiments of the present invention, the constant c, in accordance with a conservative approach, may be 150. An aggressive approach for c may have c equal to 0, and an intermediate may have c equal to 0. However, other values for c may also be chosen. If the sum of SAD values is less than the constant c as determined in diamond 62, all of the bidirectional motion estimation and fractional motion estimation should be completed, as indicated in block 64.

Otherwise, a check at block 66 determines whether the minimum of the forward and backward sums of absolute differences plus cost is less than or equal to the sum of a constant a times the maximum of the forward sum of absolute differences plus cost or the backward sum of absolute differences plus cost, that quantity minus a times a constant b. Constants a and b can also be selected based on experience. A conservative approach may use a constant a equal to 0.07 and a constant b equal to .5. An aggressive approach may use a constant a equal to 0.9 and a constant b equal to 0. An intermediate approach may use a constant a equal to 0.8 and a constant b equal to 5. Other constants can also be chosen.

If the minimum of the sum of the forward and backward sum of absolute differences plus cost is less than or equal to the calculated value in diamond 66, then the bidirectional motion estimation for all directions and fractional motion estimation for the direction with the larger sum of absolute differences plus cost, may be skipped or pruned, as indicated in block 68.

Otherwise, if the condition is not met, the bidirectional motion estimation and fractional motion estimation is completed as indicated in block 70. Then the next macroblock partition is checked as indicated at 72 and the flow iterates.

In some embodiments, the forward and backward sums of absolute differences plus cost may be normalized by the number of 4 x 4 pixel blocks in the tested partition.

The constant a is a control parameter which is less than or equal to one and greater than or equal to zero. Larger values of a result in a decrease in bidirectional motion estimation and fractional motion estimation computes and a decrease in rate distortion performance. The constant b is a protection parameter, with $b \geq 0$. With the other constants fixed, larger values of b result in an increase in bidirectional motion estimation and fractional motion estimation computes and an increase in rate distortion performance. The constant c is also a correction parameter, which is greater than or equal to zero. With other constants being fixed, larger values of c result in an increase in bidirectional motion estimation and fractional motion estimation computes and an increase in rate distortion performance. The constants a, b, and c may be adapted in real time during encoding.

The check at diamond 62 may be used to protect from dropping bidirectional motion estimation and fractional motion estimation for small sum of absolute difference values. An alternative embodiment may use the maximum of the two unidirectional sum of absolute difference values plus cost, such as if the maximum of the forward sum of absolute differences plus cost or the backwards sum of absolute differences plus cost is less than c, and then perform the bidirectional motion estimation and fractional motion estimation.

In some embodiments, by selectively removing bidirectional motion estimation and fractional motion estimation for selected macroblock partitions, trade-offs can be made between rate, distortion, and complexity.

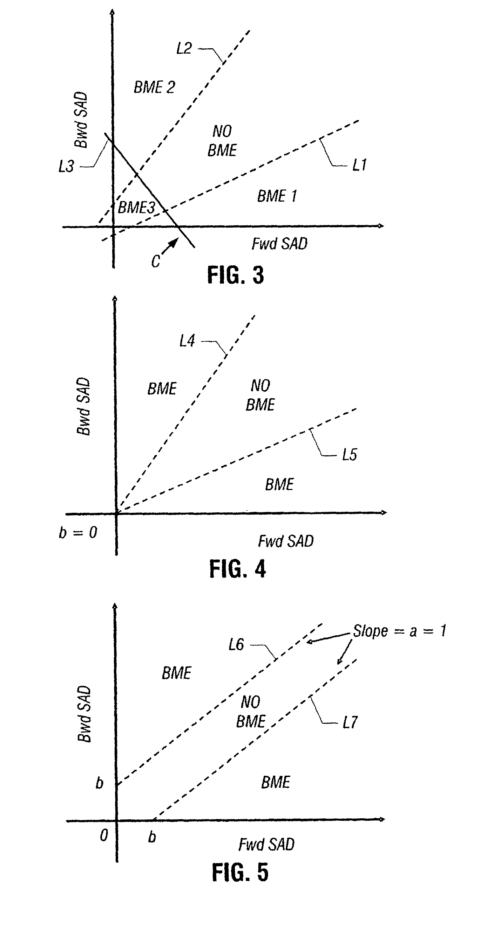

Referring to Figure 3, a graph of backward sum of absolute differences plus cost versus forward sum of absolute differences plus cost shows a line L1 with slope equal to a, a line L2 above the line L1 of slope equal

to $\dfrac{1}{a}$ , and a third line L3 (that is the set of points for which the forward sum plus cost and the backward sum plus cost is equal to c), with slope equal to -1. The Y-intercept of the line L1 with slope a is -a x b. If $c \geq 0$, $0 \leq a \leq 1$ and $b \geq 0$, and if the sum of the forward sum of absolute differences plus cost and the backward sum of absolute differences plus cost is less than c, then the bidirectional motion estimation is performed. Thus, in the area to the left of the line L3, in the region $BME_3$, bidirectional motion estimation and fractional motion estimation are performed.

Otherwise, in the region to the right of the line L3, if the minimum of the forward sum of absolute differences plus cost and backward sum of absolute differences plus cost is less than or equal to a times a maximum of the forward and backward sums of absolute differences plus cost, minus axb, then the bidirectional motion estimation is skipped. This situation corresponds generally to the region $BME_2$ above line L2 and the region $BME_1$ below line L1.

In the region to the right of the line L3, below the line L2 and above the line L1, bidirectional and fractional motion estimation are better skipped.

Referring next to Figure 4, where c is equal to zero, the line L3 of Figure 3 is no longer of interest. In the case when b is zero, then the lines L4 and L5, which correspond to lines L2 and L1 of Figure 3, intercept at the 0, 0 point of the X and Y axes.

In the situation when b equals zero, the bidirectional motion estimation and fractional motion estimation are always done below the line L5 and above the line L4 and never done between the lines L4 and L5.

Referring to Figure 5, again with c equal to zero and a equal to 1, the lines L6 and L7, which correspond to lines L2 and L1 of Figure 3, are parallel. The bidirectional motion estimation and the fractional motion estimation are not done in the region between the lines L6 and L7 but are done in the region above the line L6 and below the line L7.

A computer system 130, shown in Figure 1, may include a hard drive 134 and a removable medium 136, coupled by a bus 104 to a chipset core logic 110. The core logic may couple to the graphics processor 112 (via bus 105) and the main or host processor 100 in one embodiment. The graphics processor 112 may also be coupled by a bus 106 to a frame buffer 114. The frame buffer 114 may be coupled by a bus 107 to a display screen 118, in turn coupled to conventional components by a bus 108, such as a keyboard or mouse 120.

In the case of a software implementation, the pertinent code may be stored in any suitable semiconductor, magnetic or optical memory, including the main memory 132. Thus, in one embodiment, code 139 may be stored in a machine readable medium, such as main memory 132, for execution by a processor, such as the processor 100 or the graphics processor 112.

In one embodiment, the encoder 10 is part of the graphics processor 112. The sequence 32, shown in Figure 2, may be, in one embodiment, software, stored in main memory 132 as indicated at 139. Of course, such software could be resident on the graphics processor 112 or on any other storage device.

The graphics processing techniques described herein may be implemented in various hardware architectures. For example, graphics functionality may be integrated within a chipset. Alternatively, a discrete graphics processor may be used. As still another embodiment, the graphics functions may be implemented by a general purpose processor, including a multicore processor.

While the present invention has been described with respect to a limited number of embodiments, those skilled in the art will appreciate numerous modifications and variations therefrom. It is intended that the appended claims cover all such modifications and variations as fall within the true spirit and scope of this present invention.

**Claims**

1. A method comprising:

   analyzing whether at least one of bidirectional motion estimation or fractional motion estimation should be completed for a given unit of pixels of a B frame.

2. The method of claim 1 including determining whether both bidirectional motion estimation and fractional motion estimation should be completed.

3. The method of claim 1 where said analyzing including assessing the cost of the bidirectional or fractional motion estimation, including determining the benefit of the bidirectional or fractional motion estimation in terms of reduced distortion.

4. The method of claim 1 including determining a sum of absolute difference values for said unit and using said sum of absolute difference values to determine whether to implement one of fractional or bidirectional motion estimation, including determining forward and backward sum of absolute difference values for a macroblock partition size.

5. The method of claim 4 including summing the forward and reverse sum of absolute difference values to derive a summation value to determine whether or not to perform bidirectional or fractional motion estimation.

6. The method of claim 5 including, determining whether the summation value is less than a first constant and if said summation value is not less than said first constant, determining if the minimum of the forward and backward sum of absolute differences plus cost is less than or equal to a first value of the first constant times the maximum of the forward and backward sum of absolute differences plus cost minus the first constant times a second constant.

7. The method of claim 6 including skipping bidirectional motion estimation and fractional motion estimation for the direction with the larger sum of absolute differences plus cost.

8. The method of claim 7 including performing the bidirectional motion estimation if said minimum is not less than or equal to the first value.

9. The method of claim 6 including using a first constant that is less than or equal to one and greater than or equal to zero, a second constant that is greater than or equal to zero, and using a third constant which is greater than or equal to zero.

10. A video encoder comprising:

   a motion compensation unit; and
   a motion estimation unit coupled to said motion compensation unit, said motion estimation unit to analyze whether at least one of bidirectional motion estimation or fractional motion estimation should be completed for a given unit of pixels of a B frame.

11. The encoder of claim 10 wherein said motion estimation unit determines whether both bidirectional motion estimation and fractional motion estimation should be completed.

12. The encoder of claim 10, said motion estimation unit to determine a sum of absolute difference values for said given unit and to use said sum of absolute difference values to determine whether to implement one of fractional or bidirectional motion estimation.

13. The encoder of claim 10, said motion estimation unit to determine forward and backward sum of absolute difference values for a macroblock partition size to derive a summation value to determine whether or not to perform bidirectional or fractional motion estimation.

14. The encoder of claim 13, said motion estimation unit to determine whether the summation value is less than a first constant, and to determine if the minimum of the forward and backward sum of absolute differences is less than or equal to a first value of the first constant times a maximum of the forward and backward sum of absolute difference values minus the first constant times the second constant, if said summation value is not less than said first constant.

15. The encoder of claim 14, said motion estimation unit to skip bidirectional motion estimation and fractional motion estimation for a direction with the larger sum of absolute differences plus cost, and to perform bidirectional motion estimation if said minimum is not less than or equal to the first value.

10 ⟍

| 12 | 13 | 14 | | 16 | 18 |
|---|---|---|---|---|---|

Current Video → (+−) → Transform/ Quantization → Entropy Encoding → Channel output

Motion Estimation ── 20

Intra Prediction ── 22

Motion Compensation ── 24

Intra Interpolation ── 26

28 ── Delay    30 ── In-loop Deblocking

Inverse Quantization ── 32

Inverse Transform ── 34

**FIG. 1**

MB Partition in a B Frame

↓

Unidirectional Integer ME (Fwd and Bwd) ── 60

Fwd SAD & Bwd SAD ── 61

↓

Fwd SAD + Bwd SAD < c ? ── 62

— Yes → Perform BME and all FMEs ── 64

No ↓

$Min(Fwd\ SAD + Bwd\ SAD) <= a*max(Fwd\ SAD, Bwd\ SAD) - a*b$ ── 66

— Yes → Skip BME and FME for the direction with the larger SAD ── 68

No ↓

Perform BME and all FMEs ── 70

72 ── Check the next MB partition

**FIG. 2**

6

**FIG. 3**

**FIG. 4**

**FIG. 5**

**FIG. 6**